# EUROPÄISCHE PATENTSCHRIFT

(11) **EP 0 903 415 B1**
(45) Veröffentlichungstag und Bekanntmachung des Hinweises auf die Patenterteilung: **15.12.2010**
(21) Anmeldenummer: 98117924.5
(22) Anmeldetag: 22.09.1998
(51) Int. Cl.: C22C 1/08, B22F 3/11, B60R 13/08

(54) **Geschäumte Struktur**
Structure expansée
Foamed structure

(30) Priorität: 22.09.1997 DE 19741766
(43) Veröffentlichungstag der Anmeldung: 24.03.1999
(73) Patentinhaber: Bayerische Motoren Werke Aktiengesellschaft, 80788 München (DE)
(72) Erfinder: Braess, Hans-Hermann, Prof. Dr., 82031 Grünwald (DE)

(56) Entgegenhaltungen:
- DE-A- 3 423 657
- DE-A- 19 546 352
- DE-C- 19 534 433
- US-A- 3 535 273
- US-A- 3 738 702
- US-A- 5 516 592

## Beschreibung

Die Erfindung betrifft eine geschäumte Struktur, wie sie beispielsweise aus der DE 195 46 352 A1 bekannt ist. Die bekannte Struktur wird von einem Aluminiumschaum gebildet und ist im Inneren der vorderen Rahmenkonstruktion eines Fahrzeuges angeordnet. Die geschäumte Struktur stellt zusammen mit der Rahmenkonstruktion die Knautschzone des Fahrzeugs dar, von der die Stoßenergie bei einem Aufprall des Fahrzeuges aufgenommen wird.

Bekannt sind Fahrzeugsitze mit Teilen aus einem Schaumstoff, in dem ein Gas oder eine Flüssigkeit eingeleitet wird, damit die Sitztemperatur reguliert wird (s. z.B. US-A-3738 702.)

Geschäumte Strukturen werden darüber hinaus für eine Vielzahl von Anwendungsfällen eingesetzt. So bewirkt beispielsweise der Einsatz einer geschäumten Struktur im Inneren einer dünnwandigen Hohlstruktur eine Erhöhung der Steifigkeit der Hohlstruktur. Geschäumte Strukturen dienen auch der thermischen oder akustischen Isolation. In allen bekannten Fällen sind die physikalischen Eigenschaften der geschäumten Struktur nach ihrer Herstellung festgelegt und somit unveränderlich.

Aufgabe der Erfindung ist es, Möglichkeiten aufzuzeigen, durch die die Einsatzmöglichkeiten und die Eigenschaften einer geschäumten Struktur erweitert werden können.

Diese Aufgabe wird durch das Verfahren nach Anspruch 1 gelöst. Anspruch 9 betrifft ein Fahrzeug mit einer geschäumten Struktur.

Kerngedanke der Erfindung ist es, in das Innere einer geschäumten Struktur ein Medium einzubringen, das die physikalischen Eigenschaften der geschäumten Struktur verändert. Das Medium kann gasförmig, flüssig oder pulverförmig sein. Die geschäumte Struktur kann beispielsweise von aufschäumbaren Kunststoffmaterialien oder von Metallschäumen gebildet werden. Mit Hilfe des Mediums kann eine bestehende, an sich nicht veränderbare geschäumte Struktur so befüllt werden, daß sich die physikalischen Eigenschaften der Struktur in der gewünschten Weise verändern. Durch vollständiges oder teilweises Entfernen des Mediums lassen sich die physikalischen Eigenschaften der Struktur gegebenenfalls weiter beeinflussen.

Die Beaufschlagung mit dem Medium kann in Abhängigkeit von äußeren Bedingungen selbsttätig oder auch willkürlich, beispielsweise durch einen Bediener, erfolgen.

Durch das Medium können verschiedene physikalische Eigenschaften der geschäumten Struktur verändert werden.

So bewirkt in einer Ausgestaltung der Erfindung die Einbringung des Mediums eine Steifigkeitserhöhung, während eine Entfernung des Mediums die Steifigkeit der Struktur verringert. Analog kann durch die Einbringung bzw. Entfernung des Mediums eine Verringerung bzw. Erhöhung der thermischen oder akustischen Dämmwirkung einer geschäumten Struktur erreicht werden.

Daneben können durch das erfindungsgemäße Verfahren selbstverständlich noch weitere physikalische Eigenschaften einer geschäumten Struktur verändert werden, wie z. B. die elektrische Leitfähigkeit einer nichtleitenden oder schwach leitenden Schaumstruktur mit entsprechend ausgebildeten außenseitigen Kontaktflächen.

Bei einer erfindungsgemäßen Struktur ist gemäß einer Weiterbildung der Erfindung zur Einbringung des Mediums eine Einrichtung erforderlich, die das Medium (durch Überdruck) in das Innere der geschäumten Struktur befördert und/oder gegebenenfalls (durch Unterdruck) das Medium (wieder) aus der Struktur abzieht. Diese Einrichtung kann beispielsweise von einem permanent in Bereitschaft stehenden (Unter-)Druckspeicher, einer bedarfsweise aktivierbaren Energiequelle, einer pyrotechnischen Einrichtung, etc. gebildet werden.

Im Fall einer offenporigen Schaumstruktur kann das Medium unmittelbar in die Struktur eingebracht werden, sofern die Randbereiche der Schaumstruktur abgedichtet sind. Bevorzugt ist jedoch wenigstens ein Kanal, Kanalsystem oder anderweitig gestalteter Hohlraum im Inneren der geschäumten Struktur vorgesehen, durch die das Medium in definierter Weise Teilbereiche der Struktur ausfüllt. Durch den Kanal kann die Struktur definiert und gegebenenfalls reproduzierbar befüllt werden. Bei entsprechend großen Kanalquerschnitten ist auch eine Befüllung mit einem pulverförmigen Medium möglich.

Eine Anwendung der Erfindung betrifft eine geschäumte Struktur, die im Außenbereich eines Fahrzeuges, bevorzugt im Bereich des vorderen oder hinteren Endabschnitts des Fahrzeuges, angeordnet ist. Derartige Strukturen befinden sich z. B. innerhalb des Stoßfängers oder, wie aus dem eingangs genannten Stand der Technik ersichtlich, im Bereich der vorderen oder hinteren Rahmenlängsträger und dienen als Energieabsorptionselemente. Durch die Erfindung kann die Kraft-Weg-Kennlinie der geschäumten Struktur entsprechend den Kollisionsbedingungen (Kollisionsgeschwindigkeit, Aufprallrichtung, Kollisionsobjekt, etc.) verändert werden, so daß idealerweise die Steifigkeit und das Energieaufnahmevermögen den jeweiligen Kollisionbedingungen angepaßt werden können. Handelt es sich beispielsweise bei dem erfindungsgemäßen Fahrzeug um ein Fahrzeug mit hohem Eigengewicht, kann durch die Erfindung für den Fall einer Kollision mit einem leichteren Fahrzeug eine Kraft-Weg-Kennlinie mit einem entsprechend flachen Verlauf eingestellt werden (Kompatibilität). Auch bei Kollisionen mit Fußgängern oder Radfahrern kann eine signifikante Reduzierung der Steifigkeit des Energieabsorptionselementes die Folgen für den schwächeren Unfallbeteiligten mindern. Stößt das Fahrzeug hingegen gegen auf ein feststehendes Hindernis, wird die Steifigkeit im Sinn eines maximalen Eigenschutzes entsprechend erhöht. Somit kann eine einstellbare Knautschzonencharakteristik erzeugt werden. Die Beschickung oder Entleerung der geschäumten Struktur wird durch einen sogenannten "Pre-Crash-Sensor" vor oder in der Anfangsphase einer Kollision eingeleitet.

Eine weitere Anwendung der Erfindung ist beispielsweise bei Wandbauteilen eines Fahrzeuges gegeben. Die thermischen Eigenschaften z. B. von Karosseriewänden eines Fahrzeugs können den jeweils vorliegenden klimatischen Verhältnissen angepaßt werden, indem z. B. im Winter zur Erreichung einer maximalen Isolationswirkung ein wärmeleitendes Medium aus dem Inneren der geschäumten Struktur abgezogen oder ein Medium mit geringem Wärmeleitvermögen in die Struktur eingebracht wird. In analoger Weise kann bei starker Aufheizung des Fahrzeuginnenraumes durch eine geringe Wärmedämmung der geschäumten Struktur die Innenraumtemperatur abgesenkt werden.

Denkbar ist auch eine variable Wärmedämmung von Aggregaten, beispielsweise von Brennkraftmaschinen, mit einer maximalen Wärmedämmung zur möglichst schnellen Aufheizung der Brennkraftmaschine nach einem Kaltstart, während nachfolgend, insbesondere unter Vollast, durch Abbau der Wärmedämmung eine möglichst hohe Wärmeabgabe eingestellt wird.

Selbstverständlich können auch die akustischen Eigenschaften der wandförmigen Bauteile je nach Betriebszustand des Fahrzeuges oder des Aggregates verändert werden. So ist es beispielsweise vorstellbar, die Struktursteifigkeit einer Karosseriewand und damit deren Schwingverhalten (Eigenfrequenz, Quellen-Senken-Verteilung, etc.) in Abhängigkeit von der Drehzahl einer als Schwingungserreger wirkenden Brennkraftmaschine zu beeinflussen.

Die geschäumten Strukturen, die Medien und die Kanäle sind entsprechend den jeweils gewünschten physikalischen Effekten auszulegen. Bei den Strukturen kann es sich, wie oben beschrieben, z. B. um Trägerstrukturen oder um Flächenelemente handeln. Grundsätzlich ist es dabei auch möglich, je nach den gestellten Anforderungen mehrere physikalische Eigenschaften einer geschäumten Struktur zu verändern.

## Patentansprüche

1. Verfahren zur Veränderung der physikalischen Eigenschaften einer geschäumten Struktur in einem Fahrzeug, wobei
- in Abhängigkeit von äußeren Bedingungen oder vom Betriebszustand des Fahrzeugs oder eines Aggregates des Fahrzeugs oder
- willkürlich durch einen Bediener
das Innere der geschäumten Struktur mit einem gasförmigen, flüssigen oder pulverförmigen Medium so befüllt wird, dass sich die nachfolgend genannten physikalischen Eigenschaften der Struktur in der gewünschten Weise verändern:
- Steifigkeit der geschäumten Struktur und/oder
- Wärmedämmungs-Eigenschaften der geschäumten Struktur und/oder
- akustische Eigenschaften der geschäumten Struktur und/oder
- elektrische Leitfähigkeit einer nicht leitenden oder schwach leitenden geschäumten Struktur

2. Verfahren nach Anspruch 1,
**dadurch gekennzeichnet, dass** das Medium vollständig oder teilweise entfernt wird, um die genannten physikalischen Eigenschaften der Struktur weiter zu beeinflussen.

3. Verfahren nach Anspruch 1 oder 2, wobei das Medium die Steifigkeit der geschäumten Struktur verändert,
**dadurch gekennzeichnet, dass** die geschäumte Struktur als Energieabsorptionselement dient und durch Beschickung oder Entleerung der geschäumten Struktur mit dem Medium die Kraft-Weg-Kennlinie der geschäumten Struktur entsprechend den Kollisionsbedingungen verändert wird.

4. Verfahren nach Anspruch 3,
**dadurch gekennzeichnet, dass** bei einer Kollision mit einem leichteren Fahrzeug oder einem Fußgänger oder Radfahrer die Steifigkeit der geschäumten Struktur reduziert wird, um die Folgen der Kollision für den schwächeren Unfallbeteiligten zu mindern.

5. Verfahren nach Anspruch 3,
**dadurch gekennzeichnet, dass** bei einer Kollision mit einem feststehenden Hindernis die Steifigkeit der geschäumten Struktur im Sinn eines maximalen Eigenschutzes erhöht wird.

6. Verfahren nach Anspruch 1 oder 2, wobei das Medium die Wärmedämmungs-Eigenschaften der geschäumten Struktur verändert,
**dadurch gekennzeichnet, dass** die geschäumte Struktur eine Karosseriewand des Fahrzeugs ist und die Wärmedämmungs-Eigenschaften der geschäumten Struktur in Abhängigkeit von den klimatischen Verhältnissen und/oder der Aufheizung des Fahrzeuginnenraumes verändert werden.

7. Verfahren nach Anspruch 6,
**dadurch gekennzeichnet, dass** die geschäumte Struktur zur Wärmedämmung eines Aggregates, vorzugsweise einer Brennkraftmaschine des Fahrzeugs, dient und die Wärmedämmungs-Eigenschaften der geschäumten Struktur nach einem Kaltstart im Sinn einer möglichst schnellen Aufheizung der Brennkraftmaschine und unter Volllast im Sinn einer möglichst hohen Wärmeabgabe eingestellt werden.

8. Verfahren nach Anspruch 1 oder 2, wobei das Medium die akustischen Eigenschaften der geschäumten Struktur verändert,
**dadurch gekennzeichnet, dass** die geschäumte Struktur ein wandförmiges Bauteil ist, deren Struktursteifigkeit in Abhängigkeit von der Drehzahl der Brennkraftmaschine des Fahrzeugs verändert wird.

9. Fahrzeug mit einer geschäumten Struktur, mit einer Einrichtung, durch die das Innere der geschäumten Struktur
- in Abhängigkeit von äußeren Bedingungen oder vom Betriebszustand des Fahrzeugs oder eines Aggregates des Fahrzeugs oder
- willkürlich durch einen Bediener
mit einem gasförmigen, flüssigen oder pulverförmigen Medium so befüllt wird, dass sich die nachfolgend genannten physikalischen Eigenschaften der Struktur in der gewünschten Weise verändern:
- Steifigkeit der geschäumten Struktur und/oder
- Wärmedämmungs-Eigenschaften der geschäumten Struktur und/oder
- akustische Eigenschaften der geschäumten Struktur und/oder
- elektrische Leitfähigkeit einer nicht leitenden oder schwach leitenden geschäumten Struktur

10. Fahrzeug nach Anspruch 9,
mit einer Einrichtung, durch die das Medium vollständig oder teilweise entfernt wird, um die genannten physikalischen Eigenschaften der Struktur weiter zu beeinflussen.

11. Fahrzeug nach Anspruch 9 oder 10,
**dadurch gekennzeichnet, dass** die Einrichtung ein permanent in Bereitschaft stehender (Unter-)Druckspeicher oder eine bedarfsweise aktivierbare Energiequelle ist.

12. Fahrzeug nach einem der Ansprüche 9 bis 11,
**dadurch gekennzeichnet, dass** im Inneren der Struktur wenigstens ein Kanal, ein Kanalsystem oder ein anderweitig gestalteter Hohlraum vorgesehen ist, so dass das Medium in definierter Weise Teilbereiche der Struktur ausfüllt.

13. Fahrzeug nach einem der Ansprüche 9 bis 12, wobei die geschäumte Struktur zur Aufnahme kinetischer Energie im Fall einer Kollision des Fahrzeugs dient.

14. Fahrzeug nach einem der Ansprüche 9 bis 13, mit wenigstens einem wandförmigen Bauteil, das eine geschäumte Struktur enthält, wobei die Wärmedämmungs-Eigenschaften und/oder die akustischen Eigenschaften der Struktur und/oder die elektrischen Eigenschaften einer nicht leitenden oder schwach leitenden Struktur veränderbar sind.

## Claims

1. A method for changing the physical properties of a foamed structure in a vehicle, wherein
- as a function of outer conditions or the operating state of the vehicle or an assembly of the vehicle or
- arbitrarily by an operator
the interior of the foamed structure is filled with a gaseous, liquid or powdery medium in such a way that a physical property of the structure mentioned below changes in the desired manner:
- rigidity of the foamed structure and/or
- heat insulation properties of the foamed structure and/or
- acoustic properties of the foamed structure and/or
- electrical conductivity of a non-conductive or poorly conductive foamed structure

2. A method according to claim 1, **characterised in that** the medium is completely or partially removed to further influence said physical properties of the structure.

3. A method according to claim 1 or 2, wherein the medium changes the rigidity of the foamed structure, **characterised in that** the foamed structure is used as an energy absorption element and the load displacement characteristic curve of the foamed structure is changed in accordance with the collision conditions by filling or emptying the foamed structure with/of the medium.

4. A method according to claim 3, **characterised in that** in the event of a collision with a relatively light vehicle or a pedestrian or cyclist, the rigidity of the foamed structure is reduced to reduce the consequences of the collision for the weaker party in the accident.

5. A method according to claim 3, **characterised in that** in the event of a collision with a stationary obstacle, the rigidity of the foamed structure is increased in the direction of maximum self protection.

6. A method according to claim 1 or 2, wherein the medium changes the heat insulation properties of the foamed structure, **characterised in that** the foamed structure is a body wall of the vehicle and the heat insulation properties of the foamed structure are changed as a function of the climatic conditions and/or the heating of the vehicle interior.

7. A method according to claim 6, **characterised in that** the foamed structure is used for the heat insulation of an assembly, preferably an internal combustion engine of the vehicle and the heat insulation properties of the foamed structure are adjusted after a cold start in the direction of heating the internal combustion engine up as fast as possible, and, at full load, in the direction of a heat output which is as high as possible.

8. A method according to claim 1 or 2, wherein the medium changes the acoustic properties of the foamed structure, **characterised in that** the foamed structure is a wall-shaped component, the structural rigidity of which is changed as a function of the speed of the internal combustion engine of the vehicle.

9. A vehicle with a foamed structure, with a device, by means of which the interior of the foamed structure is filled
- as a function of outer conditions or of the operating state of the vehicle or an assembly of the vehicle or
- arbitrarily by an operator
with a gaseous, liquid or powdery medium in such a way that the physical properties of the structure mentioned below change in the desired manner:
- rigidity of the foamed structure and/or
- heat insulation properties of the foamed structure and/or
- acoustic properties of the foamed structure and/or
- electrical conductivity of a non-conductive or poorly conductive foamed structure

10. A vehicle according to claim 9, with a device by means of which the medium is completely or partially removed to further influence said physical properties of the structure.

11. A vehicle according to claim 9 or 10, **characterised in that** the device is a (negative) pressure accumulator which is permanently on standby or an energy source which can be activated as required.

12. A vehicle according to any one of claims 9 to 11, **characterised in that** at least one channel, channel system or an otherwise designed cavity is provided in the interior of the structure, so that the medium fills up part regions of the structure in a defined manner.

13. A vehicle according to any one of claims 9 to 12, wherein the foamed structure is used to absorb kinetic energy in the event of a collision of the vehicle.

14. A vehicle according to any one of claims 9 to 13, with at least one wall-shaped component, which contains a foamed structure, wherein the heat insulation properties and/or the acoustic properties of the structure and/or the electrical properties of a non-conductive or poorly conductive structure can be changed.

## Revendications

1. Procédé pour modifier les caractéristiques physiques d'une structure expansée d'un véhicule, selon lequel
- en fonction des conditions extérieures ou de l'état de fonctionnement du véhicule ou d'un équipement du véhicule, ou
- arbitrairement par l'utilisateur,
on remplit l'intérieur de la structure expansée avec un milieu à l'état gazeux, liquide ou pulvérulent de façon à modifier de manière souhaitée les caractéristiques physiques suivantes de la structure :
- rigidité de la structure expansée et/ou
- caractéristiques d'isolation thermique de la structure expansée et/ ou
- caractéristiques acoustiques de la structure expansée et/ou
- conductivité électrique d'une structure expansée non-conductrice ou faiblement conductrice.

2. Procédé selon la revendication 1,
**caractérisé en ce qu'**
on enlève complètement ou totalement le milieu pour influencer encore plus les caractéristiques physiques évoquées de la structure.

3. Procédé selon la revendication 1 ou 2, selon lequel le milieu modifie la rigidité de la structure expansée,
**caractérisé en ce que**
la structure expansée sert d'élément d'absorption d'énergie et en garnissant ou en évacuant le milieu de la structure expansée, on modifie la caractéristique course/force de la structure expansée en fonction des conditions d'une collision.

4. Procédé selon la revendication 3,
**caractérisé en ce qu'**
en cas de collision avec un véhicule léger, un piéton ou un cycliste, on réduit la rigidité de la structure expansée pour diminuer les conséquences de la collision pour l'accidenté le plus vulnérable.

5. Procédé selon la revendication 3,
**caractérisé en ce qu'**
en cas de collision avec un obstacle fixe, on augmente la rigidité de la structure expansée pour assurer la protection propre, maximale.

6. Procédé selon la revendication 1 ou 2, selon lequel le milieu modifie les caractéristiques d'isolation thermique de la structure expansée, procédé **caractérisé en ce que**
la structure expansée est une paroi de carrosserie du véhicule et on modifie les caractéristiques d'isolation thermique de la structure expansée en fonction des conditions climatiques et/ou du chauffage de l'habitacle du véhicule.

7. Procédé selon la revendication 6,
**caractérisé en ce que**
la structure expansée sert à l'isolation thermique d'un équipement de préférence du moteur à combustion du véhicule et les caractéristiques d'isolation thermique de la structure expansée sont réglées après un démarrage à froid, dans le sens d'un chauffage aussi rapide que possible du moteur à combustion et dans le cas d'un fonctionnement à pleine charge, dans le sens d'une évacuation aussi élevée que possible de la chaleur.

8. Procédé selon la revendication 1 ou 2, selon lequel le milieu modifie les caractéristiques acoustiques de la structure expansée,
**caractérisé en ce que**
la structure expansée est un composant en forme de cloison dont on modifie la rigidité structurelle en fonction de la vitesse de rotation du moteur à combustion du véhicule.

9. Véhicule à structure expansée comportant une installation permettant de modifier l'intérieur de la structure expansée,
- en fonction des conditions extérieures ou de l'état de fonctionnement du véhicule ou de l'équipement du véhicule, ou
- arbitrairement par l'utilisateur,
en le remplissant avec un milieu à l'état gazeux, liquide ou pulvérulent, de façon à modifier de manière souhaitée les caractéristiques physiques suivantes de la structure :
- rigidité de la structure expansée et/ ou
- caractéristiques d'isolation thermique de la structure expansée et/ou
- caractéristiques acoustiques de la structure expansée et/ou
- conductivité électrique d'une structure expansée non-conductrice ou faiblement conductrice.

10. Véhicule selon la revendication 9, comportant une installation qui élimine totalement ou partiellement le milieu pour influencer encore plus les caractéristiques physiques évoquées de la structure.

11. Véhicule selon la revendication 9 ou 10,
**caractérisé en ce que**
l'installation est un accumulateur de pression (dépression) disponible en permanence ou une source d'énergie activée à la demande.

12. Véhicule selon l'une des revendications 9 à 11,
**caractérisé en ce que**
l'intérieur de la structure comporte au moins un canal, un système de canaux, cavités de formes différentes, pour que le milieu remplisse de manière définie des zones partielles de la structure.

13. Véhicule selon l'une des revendications 9 à 12, selon lequel la structure expansée sert à absorber l'énergie cinétique en cas de collision du véhicule.

14. Véhicule selon l'une des revendications 9 à 13 ayant au moins un composant en forme de cloison qui comporte une structure expansée, les caractéristiques d'isolation thermique et/ou les caractéristiques acoustiques de la structure et/ou les caractéristiques électriques d'une structure non-conductrice ou faiblement conductrice, pouvant être modifiées.
